# EUROPÄISCHE PATENTSCHRIFT

(11) **EP 4 542 729 B1**
(45) Veröffentlichungstag und Bekanntmachung des Hinweises auf die Patenterteilung: **08.10.2025**
(21) Anmeldenummer: 24200445.5
(22) Anmeldetag: 16.09.2024
(51) Int. Cl.: H01M 10/613, H01M 10/615, H01M 10/625, H01M 10/627, H01M 10/6556, H01M 10/6563, H01M 50/202, H01M 50/249, H01M 50/251, H01M 10/6571

(54) **BATTERIESYSTEM**
BATTERY SYSTEM
SYSTÈME DE BATTERIE

(30) Priorität: 17.10.2023 DE 102023128339
(43) Veröffentlichungstag der Anmeldung: 23.04.2025
(73) Patentinhaber: Purem GmbH, 66539 Neunkirchen (DE)
(72) Erfinder: Neumann, Felix, Aichwald (DE); Felger, Dennis, Esslingen (DE); Klein, Benedikt, Neunkirchen (DE); Mayer, Michael, Bempflingen (DE)
(74) Vertreter: Ruttensperger Lachnit Trossin Gomoll

(56) Entgegenhaltungen:
- EP-A1- 3 799 188
- EP-B1- 2 359 432
- WO-A1-2023/093502
- DE-A1- 102017 123 274
- US-A1- 2006 210 868
- US-A1- 2012 189 893

## Beschreibung

Die vorliegende Erfindung betrifft ein Batteriesystem, das beispielsweise in elektromotorisch betriebenen Fahrzeugen eingesetzt werden kann. Auch in anderen Einsatzbereichen, wie zum Beispiel in Verbindung mit stationären Photovoltaikanlagen oder dergleichen, kann ein derartiges Batteriesystem Anwendung finden.

Derartige Batteriesysteme umfassen im Allgemeinen vergleichsweise groß dimensionierte Batterieeinheiten, welche zur Speicherung großer Energiemengen und zur Erzeugung vergleichsweise hoher Betriebsströme ausgebildet sind. Es ist vorteilhaft, derartige Batterieeinheiten für einen effizienten Betrieb und zum Vermeiden von Schäden in einem vorgegebenen Temperaturbereich zu betreiben.

Aus der EP 2 359 432 B1 ist ein Batteriesystem gemäß dem Oberbegriff des Anspruchs 1 bekannt, das dazu ausgebildet ist, bei in einem Fahrzeug vorgesehenen Lithium-Ionen-Batterien bei Auftreten von Störungen das Austreten von zum Teil giftigen Gasen zu vermeiden. Bei diesem Batteriesystem sind die Batteriezellen in einem Gehäuse angeordnet, das in Zuordnung zu einem Lufteintrittsbereich und einem Luftaustrittsbereich jeweilige Absperrvorrichtungen aufweist, um das die Batteriezellen enthaltene Gehäuse wahlweise zur Durchströmung mit durch eine Luftfördervorrichtung geförderter Luft freizugeben und gegen Durchströmung abzusperren.

Die DE 10 2017 123 274 A1 offenbart ein beispielsweise als Staubsauger ausgebildetes Haushaltsgerät, bei welchem die durch ein Gebläse geförderte Luft wahlweise durch ein eine Batterie bzw. Zellen derselben enthaltendes Gehäuse geleitet werden kann.

Aus der US 2006/020868 A1 ist ein Batteriesystem für ein Fahrzeug bekannt, bei welchem die beispielsweise zur Bereitstellung elektrischer Energie für Elektromotoren eines Hybrid-Fahrzeugs vorgesehene Batterie in einem Gehäuse angeordnet ist. In einem Lufteintrittsbereich des Gehäuses ist ein Gebläse zum Fördern von Luft durch das Gehäuse vorgesehen. Stromabwärts des Gebläses und stromaufwärts der Batteriezellen der Batterie ist eine Heizvorrichtung vorgesehen, durch welche die vermittels des Gebläses durch das Gehäuse geförderte Luft erwärmt werden kann.

Die US 2012/0189893 A1 offenbart ein Batteriesystem, bei welchem die Batteriezellen einer Batterie in einem Gehäuse angeordnet sind. Durch ein in einem Lufteintrittsbereich des Gehäuses angeordnetes Gebläse kann in einem Heiz-Wärmetauscher erwärmte Luft oder in einem Kühl-Wärmetauscher gekühlte Luft in das Gehäuse gefördert werden. Stromaufwärts des Gebläses und stromabwärts der beiden Wärmetauscher ist ein Ventil angeordnet, welches wahlweise die im Heiz-Wärmetauscher erwärmte Luft oder die im Kühl-Wärmetauscher gekühlte Luft in Richtung zu dem Gebläse leitet.

Aus der WO 2023/093502A1 ist ein Batteriesystem für ein Fahrzeug bekannt, bei welchem eine Batterie bzw. Zellen derselben in einem Gehäuse angeordnet sind. In Zuordnung zu einem Lufteintrittsbereich und einem Luftaustrittsbereich des Gehäuses ist jeweils eine Absperrvorrichtung vorgesehen, um das Gehäuse wahlweise zur Durchströmung mit Luft freizugeben bzw. gegen Durchströmung abzusperren. Eine wahlweise mit einem das Batteriesystem enthaltenden Fahrzeug zum Laden der Batterie zu verbindende Ladeeinheit ist dazu ausgebildet, bei Durchführung eines Ladevorgangs über einen in einem mit dem Fahrzeug gekoppelten Ladekabel ausgebildeten Luftströmungskanal Luft in Richtung zu dem Lufteintrittsbereich des Gehäuses zu fördern.

Die EP 3 799 188 A1 offenbart ein Batteriesystem mit in einem Gehäuse untergebrachten Batteriezellen einer Batterie. Durch ein Gebläse kann Luft durch einen in dem Gehäuse sich erstreckenden Kanal geleitet werden. Die in dem Kanal strömende Luft kann von der Batterie abgegebene Wärme aufnehmen und aus dem Bereich des Gehäuses abführen.

Es ist die Aufgabe der vorliegenden Erfindung, ein Batteriesystem, beispielsweise zur Verwendung in elektromotorisch betriebenen Fahrzeugen, bereitzustellen, mit welchem in einfacher Weise die Temperatur einer Batterieeinheit eingestellt bzw. reguliert werden kann.

Erfindungsgemäß wird diese Aufgabe gelöst durch ein Batteriesystem, insbesondere für ein Fahrzeug, gemäß Anspruch 1. Das Batteriesystem umfasst:
- ein Batteriesystemgehäuse, wobei das Batteriesystemgehäuse einen Lufteintrittsbereich und einen Luftaustrittsbereich für das Batteriesystemgehäuse durchströmende Luft aufweist,
- wenigstens eine Batterieeinheit, wobei die wenigstens eine Batterieeinheit in dem Batteriesystemgehäuse von das Batteriesystemgehäuse durchströmender Luft umströmbar aufgenommen ist.

Bei diesem Batteriesystem wird, anders als dies in elektrisch betriebenen Fahrzeug im Allgemeinen üblich ist, als Temperiermedium ein Gas, nämlich Luft verwendet. Dies führt zu einem deutlich vereinfachten Aufbau für das Temperiermedium führende Komponenten und ermöglicht eine vergleichsweise schnelle Reaktion auf Temperaturänderungen.

Um die Zufuhr von Luft in einfacher Weise definiert einstellen zu können, ist dem Lufteintrittsbereich eine erste Absperrvorrichtung zugeordnet zum wahlweisen Absperren des Lufteintrittsbereichs gegen den Eintritt von Luft in das Batteriesystemgehäuse und Freigeben des Lufteintrittsbereichs zum Eintritt von Luft in das Batteriesystemgehäuse. Gleichermaßen ist zum definierten Einstellen der Luftabgabe dem Luftaustrittsbereich eine zweite Absperrvorrichtung zugeordnet zum wahlweisen Absperren des Luftaustrittsbereichs gegen den Austritt von Luft aus dem Batteriesystemgehäuse und Freigeben des Luftaustrittsbereichs zum Austritt von Luft aus dem Batteriesystemgehäuse.

Zum Erzeugen einer Luftströmung ist eine Luftfördervorrichtung zum Fördern von Luft durch das Batteriesystemgehäuse vorgesehen.

Für einen effizienten Förderbetrieb es ist die Luftfördervorrichtung am Lufteintrittsbereich oder stromaufwärts des Lufteintrittsbereichs vorgesehen.

Um der zur thermischen Konditionierung der wenigstens einen Batterieeinheit zu nutzenden Luft zum Erwärmen der wenigstens einen Batterieeinheit Wärme zuzuführen, ist eine Heizvorrichtung vorgesehen zum Erwärmen von das Batteriesystemgehäuse durchströmender Luft.

Die Heizvorrichtung ist am Lufteintrittsbereich oder stromaufwärts des Lufteintrittsbereichs vorgesehen.

Die Heizvorrichtung ist stromaufwärts der Luftfördervorrichtung und stromabwärts der ersten Absperrvorrichtung vorgesehen.

Für eine erhöhte Effizienz bei der thermischen Konditionierung kann die wenigstens eine Batterieeinheit eine Mehrzahl von in dem Batteriesystemgehäuse in Abstand zueinander angeordneten Batteriezellen umfassen.

Um ein im Wesentlichen autark arbeitendes System bereitstellen zu können, wird vorgeschlagen, dass wenigstens eine Vorrichtung von erster Absperrvorrichtung, zweiter Absperrvorrichtung, Luftfördervorrichtung und Heizvorrichtung aus der wenigstens einen Batterieeinheit mit elektrischer Energie gespeist wird. Die Bereitstellung eines weiteren Energiespeichers zum Betreiben eines derartigen Systembereichs ist dann nicht erforderlich.

Die vorliegende Erfindung wird nachfolgend mit Bezug auf die beiliegenden Figuren detailliert beschrieben. Es zeigt:
- Fig. 1: eine prinzipartige Darstellung eines Batteriesystems in einem Batterie-Erwärmungsbetrieb;
- Fig. 2: das Batteriesystem der Fig. 1 in einem Batterie-Kühlbetrieb;
- Fig. 3: Batteriesystem der Fig. 1 in einem Batterie-Isolierbetrieb.

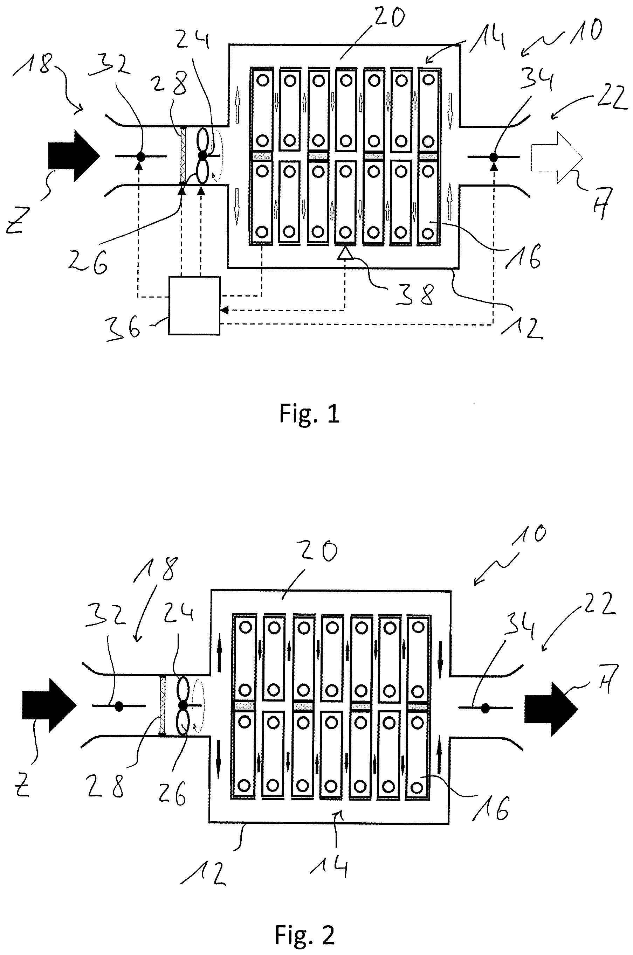

Die Fig. 1 zeigt in prinzipartiger Darstellung ein Batteriesystem 10, welches beispielsweise in einem elektromotorisch betriebenen Fahrzeug eingesetzt werden kann, um die Fahrmotoren mit elektrischer Energie zu speisen. Das Batteriesystem 10 umfasst ein beispielsweise mit Kunststoffmaterial oder/und Metallmaterial aufgebautes Batteriesystemgehäuse 12, in welchem eine allgemein mit 14 bezeichnete Batterieeinheit angeordnet ist. Die Batterieeinheit 14 kann eine Mehrzahl von zumindest teilweise in Abstand zueinander angeordneten Batteriezellen 16 umfassen.

Das Batteriesystemgehäuse 12 weist einen Lufteintrittsbereich 18 auf, der im dargestellten Ausgestaltungsbeispiel kanalartig ausgebildet ist und über welchen im Bereich des Batteriesystems 10 vorhandene Umgebungsluft als Zuluft Z in einen Innenraum 20 des Batteriesystemgehäuses 12 eintreten kann. Gleichermaßen umfasst das Batteriesystemgehäuse 12 einen Luftaustrittsbereich 22, der im dargestellten Ausgestaltungsbeispiel ebenfalls kanalartig ausgebildet ist und über welchen die den Innenraum 20 des Batteriesystemgehäuses 12 durchströmende Luft als Abluft A zur Umgebung abgegeben werden kann.

In dem kanalartig ausgebildeten Lufteintrittsbereich 18 ist eine beispielsweise als Gebläse, Kompressor oder dergleichen ausgebildete Luftfördervorrichtung 24 mit einem zum Fördern der Zuluft Z in den Innenraum 20 des Batteriesystemgehäuses 12 zur Drehung antreibbaren Förderrad 26 vorgesehen. Unter der Förderwirkung der Luftfördervorrichtung 24 strömt die Zuluft Z in den Innenraum 22 und strömt, wie durch Strömungspfeile angedeutet, entlang der Außenoberfläche der Batterieeinheit 14 bzw. auch zwischen den in Abstand zueinander angeordneten Batteriezellen 16 der Batterieeinheit 14. Nach dem Umströmen der Batterieeinheit 14 verlässt die Abluft A den Innenraum 20 über den Luftaustrittsbereich 22.

Stromaufwärts der Luftfördervorrichtung 24 ist in dem kanalartigen Lufteintrittsbereich 18 eine Heizvorrichtung 28 angeordnet. Die Heizvorrichtung 28 ist im dargestellten Ausgestaltungsbeispiel elektrisch betrieben und umfasst beispielsweise einen oder mehrere bei Anlegen einer elektrischen Spannung Wärme erzeugende Heizleiter. Die durch das Förderrad 26 der Luftfördervorrichtung 24 durch den Lufteintrittsbereich 18 hindurch geförderte Zuluft Z, welche vor Eintritt in den Lufteintrittsbereich 18 im Wesentlichen die Umgebungstemperatur aufweist, nimmt im Bereich der Heizvorrichtung 28 Wärme auf und tritt somit erwärmt in den Innenraum 20 des Batteriesystemgehäuses 12 ein. Beim Umströmen der Batterieeinheit 14 überträgt die Zuluft Z Wärme auf die Batterieeinheit 14 und verlässt somit den Innenraum 20 des Batteriesystemgehäuses 12 als Abluft A mit im Vergleich zu der Temperatur der an der Heizvorrichtung 28 erwärmten Zuluft Z gesenkter Temperatur.

Um das Batteriesystemgehäuse 12 zur Durchströmung mit Luft als Temperiermedium freizugeben, ist dem Lufteintrittsbereich 18 eine beispielsweise ebenfalls in dem kanalartigen Lufteintrittsbereich 18 stromaufwärts der Heizvorrichtung 28 angeordnete erste Absperrvorrichtung 32 zugeordnet. Die erste Absperrvorrichtung 32 kann nach Art eines Ventils oder einer beispielsweise in Abgasanlagen eingesetzten Drosselklappe ausgebildet sein und durch einen zugeordneten Stellantrieb zwischen einer den Lufteintrittsbereich 18 gegen den Eintritt von Luft im Wesentlichen absperrenden Schließstellung und der in Fig. 1 dargestellten, den Lufteintrittsbereich 18 zur Durchströmung von Luft im Wesentlichen freigebenden Offenstellung verstellt werden.

Dem Luftaustrittsbereich 22 ist eine beispielsweise in dem kanalartig ausgebildeten Luftaustrittsbereich 22 angeordnete zweite Absperrvorrichtung 34 zugeordnet. Auch diese kann nach Art eines Ventils bzw. einer Stellklappe ausgebildet sein und durch einen zugeordneten Stellantrieb zwischen der in Fig. 1 dargestellten und den Luftaustrittsbereich 22 zur Durchströmung freigebenden Offenstellung und einer den Luftaustrittsbereich 22 gegen den Durchtritt von Luft im Wesentlichen absperrenden Schließstellung verstellt werden.

Die Luftfördervorrichtung 24, die Heizvorrichtung 28 und die beiden Absperrvorrichtungen 32, 34 stehen unter der Ansteuerung einer Steuereinheit 36. Diese kann, beispielsweise unter Berücksichtigung eines von einem Temperatursensor 38 ausgegebenen Temperatursignals, die verschiedenen unter ihrer Ansteuerung stehenden Systembereiche entsprechend dem Temperaturzustand der Batterieeinheit 14 ansteuern. Indiziert das vom Temperatursensor 38 ausgegebene Temperatursignal eine zu niedrige Temperatur der Batterieeinheit 14, kann die Steuereinheit 36 in dem in Fig. 1 veranschaulichten Batterie-Erwärmungsbetrieb die beiden Absperrvorrichtungen 32, 34 so ansteuern, dass diese in ihrer Offenstellung sind oder in diese gebracht werden. Ferner steuert die Steuereinheit 36 die Luftfördervorrichtung 24 zum Fördern der Zuluft Z über den Lufteintrittsbereich 18 in den Innenraum 20 des Batteriesystemgehäuses 12 an, und steuert die Heizvorrichtung 28 zum Erzeugen von Wärme an, um die Zuluft Z zu erwärmen. Dabei kann, wie dies die Fig. 1 veranschaulicht, die Steuereinheit 36 die zum Betreiben der verschiedenen Systembereiche erforderliche elektrische Energie der Batterieeinheit 14, beispielsweise einer Batteriezelle 16 der Batterieeinheit 14, entnehmen, so dass hinsichtlich des Energiebedarfs das Batteriesystem 10 im Wesentlichen autark betrieben werden kann.

Im Batterie-Erwärmungsbetrieb kann das Ausmaß der Erwärmung der Batterieeinheit 14 einerseits durch die Einstellung der geförderten Menge der Zuluft Z und andererseits durch die in der Heizvorrichtung 28 generierte Wärmemenge eingestellt werden. Hierzu können die Drehzahl des Förderrads 26 sowie die Heizleistung der Heizvorrichtung 28 durch die Steuereinheit 36 entsprechend dem geforderten Wärmebedarf eingestellt werden.

Die Fig. 2 veranschaulicht das Batteriesystem 10 in einem Batterie-Kühlbetrieb. Im Kühlbetrieb wird die Zuluft Z bei in die Offenstellung gestellten Absperrvorrichtungen 32, 34 und nicht erregter Heizvorrichtung 28 in den Innenraum 20 des Batteriesystemgehäuses 12 gefördert. Hierzu wird durch die in Fig. 2 nicht dargestellte Steuereinheit 36 die Luftfördervorrichtung 24 zum Erhalt eines erforderlichen Zuluftmengenstroms betrieben. Die hinsichtlich ihrer Temperatur der Umgebungstemperatur entsprechende Zuluft Z durchströmt den Innenraum 20 und die darin angeordneten Batteriezellen 16 der Batterieeinheit 14 und nimmt dabei Wärme auf. Die bezüglich der Zuluft Z erwärmte Abluft A transportiert beim Verlassen des Batteriesystemgehäuses 12 Wärme von der Batterieeinheit 14 weg, so dass diese gekühlt wird und in dem für den Batteriebetrieb optimalen Temperaturbereich gehalten werden kann.

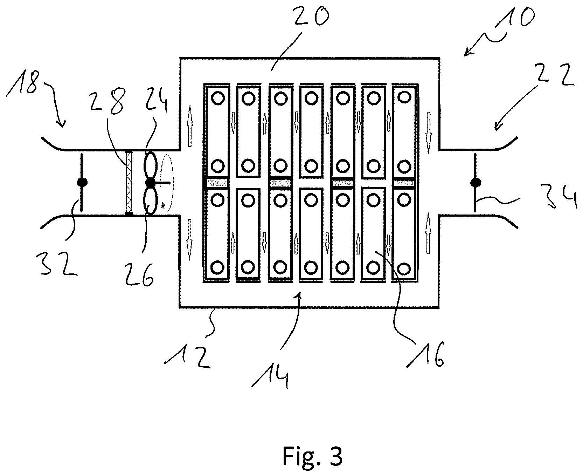

Die Fig. 3 zeigt das Batteriesystem 10 in einem Batterie-Isolierbetrieb. Im Batterie-Isolierbetrieb sind die beiden Absperrvorrichtungen 32, 34 in ihrer Schließstellung, so dass über den Lufteintrittsbereich 18 im Wesentlichen keine Zuluft in den Innenraum 20 des Batteriesystemgehäuses 12 strömen kann und über den Luftaustrittsbereich 22 im Wesentlichen keine Abluft aus dem Innenraum 20 entweichen kann. Die Heizvorrichtung 18 ist im Batterie-Isolierbetrieb nicht in Betrieb und erzeugt keine Wärme. Die Luftfördervorrichtung 24 kann ebenfalls deaktiviert sein oder kann zum Erzeugen einer Luftumwälzung im Innenraum 20 des Batteriesystemgehäuses 12 beispielsweise mit vergleichsweise geringer Drehzahl des Förderrads 26 betrieben werden. Der Batterie-Isolierbetrieb wird gewählt, wenn die durch den in der Fig. 1 veranschaulichten Temperatursensor 38 erfasste Temperatur der Batterieeinheit 14 in dem für deren Betrieb vorgesehenen optimalen Temperaturbereich liegt.

Es ist darauf hinzuweisen, dass das vorangehend mit Bezug auf verschiedene Betriebsarten beschriebene und in den Figuren dargestellte Batteriesystem in verschiedenen Bereichen variiert werden kann. So kann beispielsweise die zum Betreiben der verschiedenen Systembereiche des Batteriesystems erforderliche Energie auch von einer externen Energiequelle, beispielsweise einem Niederspannungssystem in einem Fahrzeug, bereitgestellt werden. Selbstverständlich kann die die verschiedenen Systembereiche ansteuernde Steuereinheit auch mit einem Informationssystem eines Fahrzeugs vernetzt sein, um den Betrieb des Batteriesystems 10 zum Erwärmen, Kühlen oder Konstanthalten der Temperatur der Batterieeinheit unter Berücksichtigung weiterer Betriebsparameter eines Fahrzeugs einzustellen. Weiter kann ein derartiges Batteriesystem auch in anderen Anwendungen, insbesondere stationären Anwendungen beispielsweise in Verbindung mit einem an einem Gebäude oder im Freibereich vorgesehenen Photovoltaiksystem, eingesetzt werden.

## Patentansprüche

1. Batteriesystem, insbesondere für ein Fahrzeug, umfassend:
- ein Batteriesystemgehäuse (12), wobei das Batteriesystemgehäuse (12) einen Lufteintrittsbereich (18) und einen Luftaustrittsbereich (22) für das Batteriesystemgehäuse (14) durchströmende Luft aufweist,
- wenigstens eine Batterieeinheit (14), wobei die wenigstens eine Batterieeinheit (14) in dem Batteriesystemgehäuse (12) von das Batteriesystemgehäuse (12) durchströmender Luft umströmbar aufgenommen ist,
- eine dem Lufteintrittsbereich (18) zugeordnete erste Absperrvorrichtung (32) zum wahlweisen Absperren des Lufteintrittsbereichs (18) gegen den Eintritt von Luft in das Batteriesystemgehäuse (12) und Freigeben des Lufteintrittsbereichs (18) zum Eintritt von Luft in das Batteriesystemgehäuse (12)
- eine dem Luftaustrittsbereich (22) zugeordnete zweite Absperrvorrichtung (34) zum wahlweisen Absperren des Luftaustrittsbereichs (22) gegen den Austritt von Luft aus dem Batteriesystemgehäuse (12) und Freigeben des Luftaustrittsbereichs (22) zum Austritt von Luft aus dem Batteriesystemgehäuse (12),
- eine am Lufteintrittsbereich (18) oder stromaufwärts des Lufteintrittsbereichs (18) vorgesehene Luftfördervorrichtung (24) zum Fördern von Luft durch das Batteriesystemgehäuse (12),
**dadurch gekennzeichnet, dass** eine am Lufteintrittsbereich (18) oder stromaufwärts des Lufteintrittsbereichs (18) stromaufwärts der Luftfördervorrichtung (24) und stromabwärts der ersten Absperrvorrichtung (32) vorgesehene Heizvorrichtung (28) zum Erwärmen von das Batteriesystemgehäuse (12) durchströmender Luft.

2. Batteriesystem nach Anspruch 1,
**dadurch gekennzeichnet, dass** die wenigstens eine Batterieeinheit (14) eine Mehrzahl von in dem Batteriesystemgehäuse (12) in Abstand zueinander angeordneten Batteriezellen (16) umfasst.

3. Batteriesystem nach Anspruch 1 oder 2,
**dadurch gekennzeichnet, dass** wenigstens eine Vorrichtung von erster Absperrvorrichtung (32), zweiter Absperrvorrichtung (34), Luftfördervorrichtung (24) und Heizvorrichtung (28) aus der wenigstens einen Batterieeinheit (14) mit elektrischer Energie gespeist wird.

## Claims

1. A battery system, in particular for a vehicle, comprising:
- a battery system housing (12), wherein the battery system housing (12) has an air inlet region (18) and an air outlet region (22) for the air flowing through the battery system housing (12),
- at least one battery unit (14), wherein the at least one battery unit (14) is accommodated in the battery system housing (12) so that air flowing through the battery system housing (12) can flow around it,
- a first shut-off device (32) associated with the air inlet region (18) in order selectively to shut off the air inlet region (18) against the inlet of air into the battery system housing (12) and to free the air inlet region (18) for the inlet of air into the battery system housing (12),
- a second shut-off device (34) associated with the air outlet region (22) in order selectively to shut off the air outlet region (22) against the outlet of air from the battery system housing (12) and to free the air outlet region (22) for the outlet of air from the battery system housing (12),
- an air delivery device (24) provided at the air inlet region (18) or upstream from the air inlet region (18) for delivering air through the battery system housing (12),
**characterized in that** a heating device (28) is provided at the air inlet region (18) or upstream from the air inlet region (18) upstream from the air delivery device (24) and downstream from the first shut-off device (32) for heating air flowing through the battery system housing (12).

2. The battery system as claimed in claim 1,
**characterized in that** the at least one battery unit (14) comprises a plurality of battery cells (16) arranged spaced apart from one another in the battery system housing (12).

3. The battery system as claimed in claim 1 or 2,
**characterized in that** at least one device out of the first shut-off device (32), the second shut-off device (34), the air delivery device (24), and the heating device (28) is fed with electrical energy from the at least one battery unit (14).

## Revendications

1. Système de batterie, en particulier pour un véhicule, comprenant :
- un boîtier de système de batterie (12), dans lequel le boîtier de système de batterie (12) comporte une zone d'entrée d'air (18) et une zone de sortie d'air (22) pour l'air s'écoulant à travers le boîtier de système de batterie (12),
- au moins une unité de batterie (14), dans lequel ladite au moins une unité de batterie (14) est logée dans le boîtier de système de batterie (12) de telle sorte que l'air circulant à travers le boîtier de système de batterie (12) puisse circuler autour de celle-ci,
- un premier dispositif d'obturation (32) associé à la zone d'entrée d'air (18) afin d'obturer de manière sélective la zone d'entrée d'air (18) contre l'entrée d'air dans le boîtier de système de batterie (12) et de libérer la zone d'entrée d'air (18) pour l'entrée d'air dans le boîtier de système de batterie (12),
- un deuxième dispositif d'obturation (34) associé à la zone de sortie d'air (22) afin d'obturer de manière sélective la zone de sortie d'air (22) contre la sortie de l'air du boîtier de système de batterie (12) et de libérer la zone de sortie d'air (22) pour la sortie de l'air du boîtier de système de batterie (12),
- un dispositif d'alimentation en air (24) prévu au niveau de la zone d'entrée d'air (18) ou en amont de la zone d'entrée d'air (18) pour faire circuler l'air à travers le boîtier de système de batterie (12),
**caractérisé en ce qu'un** dispositif de chauffage (28) est prévu au niveau de la zone d'entrée d'air (18) ou en amont de la zone d'entrée d'air (18), en amont du dispositif d'alimentation en air (24) et en aval du premier dispositif d'obturation (32), pour chauffer l'air circulant à travers le boîtier du système de batterie (12).

2. Système de batterie selon la revendication 1,
**caractérisé en ce que** ladite au moins une unité de batterie (14) comprend une pluralité de cellules de batterie (16) disposées à distance les unes des autres dans le boîtier de système de batterie (12).

3. Système de batterie selon la revendication 1 ou 2,
**caractérisé en ce qu'**au moins un dispositif parmi le premier dispositif d'obturation (32), le deuxième dispositif d'obturation (34), le dispositif d'alimentation en air (24) et le dispositif de chauffage (28) est alimenté en énergie électrique par ladite au moins une unité de batterie (14).
